# EUROPEAN PATENT SPECIFICATION

(11) **EP 0 372 920 B1**
(45) Date of publication and mention of the grant of the patent: **22.09.1993**
(21) Application number: 89312700.1
(22) Date of filing: 06.12.1989
(51) Int. Cl.: B29C 33/04, B29D 30/06

(54) **Vulcanising apparatus**
Vulkanisiervorrichtung
Dispositif de vulcanisation

(30) Priority: 08.12.1988 JP 311334/88
(43) Date of publication of application: 13.06.1990
(73) Proprietor: SUMITOMO RUBBER INDUSTRIES LIMITED, Kobe-shi Hyogo-ken (JP); MITSUBISHI JUKOGYO KABUSHIKI KAISHA, Tokyo (JP)
(72) Inventor: Soeda, Koji, Kobe-shi Hyogo-ken (JP); Okamoto, Shoji, Toyota-shi Aichi-ken (JP); Kubota, Yoshiya, Toyota-shi Aichi-ken (JP); Kubota, Akinori, Kobe-shi Hyogo-ken (JP); Kobayashi, Michihito, Toyota-shi Aichi-ken (JP); Ozawa, Susumu, Hekinan-shi Aichi-ken (JP); Irie, Nobuhiko c/o Nagasaki Shipyard & Engine Work, Nagasaki-shi Nagasaki-ken (JP); Katayama, Hideaki Nagasaki Shipyard & Engine Works, Nagasaki-shi Nagasaki-ken (JP); Sakaguchi, Katsuyoshi, Nagasaki-shi Nagasaki-ken (JP); Ijiri, Masaaki, Aichi-gun Aichi-ken (JP); Tomosada, Kiyoshi, Toyota-shi Aichi-ken (JP); Hasegawa, Akira Nagasaki Shipyard & Engine Works, Nagasaki-shi Nagasaki-ken (JP); Murakami, Toshifumi, Nagasaki-shi Nagasaki-ken (JP)
(74) Representative: Stewart, Charles Geoffrey

(56) References cited:
- EP-A- 0 170 109
- EP-A- 0 244 286
- FR-A- 2 613 979
- PATENT ABSTRACTS OF JAPAN, vol. 10, no. 73 (M-463)[2130], 22nd March 1986 & JP-A-60 217 114 (MATSUSHITA DENKI SANGYO K.K.) 30-10-1985

## Description

The present invention relates to a vulcanising apparatus equipped with a mould having a jacket portion for heating, and more particularly to a tyre vulcanising apparatus of a segmental mould tyre.

A tyre vulcanising apparatus of a segmental mould tyre comprises, in general, an upper platen (e) supported by a bolster (q) with an insulating member (r) disposed therebetween an mould member (f) detachably connected to the upper platen (e) via a locking mechanism and having a jacket portion (g) for heating a plurality of circumferentially divided sectors (c) supported slidably by the mould member (f) a tread ring (t) supported by the sectors (c) an upper mould (a) supported by ab up down mechanism which is not shown in Fig .7 a lower platen (s) and a lower mould (b) supported by the lower platen (s). Further, there are provided a steam inlet pipe (h) and a steam outlet pipe (i) communicating with the jacket portion (g) formed in the mould member (f) for the heating of the sectors (c). The steam inlet pipe (h) passes through a hole (k) and projects outwardly from a heat shield (j), and further connects with a steam supply pipe (m) via a flexible tube (1). The steam outlet pipe (i) passes through a hole (n) and projects outwardly from the heat shield (j), and further connects with a steam discharge pipe (p) via another flexible tube (o). Such an apparatus is shown in Fig 7. EP-A-0 170 109 discloses an apparatus according to the preamble of Claim 1.

Thus, to change the mould requires disconnecting and reconnecting work between the flexible tube (1) and the steam inlet pipe (h) and between the flexible tube (o) and the steam outlet (i). Thus the prior art apparatus has an important problem that a mould change requires much labour and much time. Moreover, in the prior art apparatus the heat shield (j) has holes (h,n) and therefore its effectiveness is reduced.

An object of the present invention is to provide a vulcanising apparatus in which a mould change can be carried out easily and rapidly and the moulding productivity can be improved.

A vulcanising apparatus equipped with an upper platen supported by a bolster and with a mould member detachably connected to said upper platen said mould member having a jacket portion for heating characterised in that there is formed a pair of through passages extending from an upper surface of said bolster to a bottom surface of said upper platen a steam inlet pipe is connected to an upper open end of a first through passage of said pair of passages, a steam outlet pipe is connected to an upper end of a second through passage of said pair of penetrating passages, there is formed at the upper portion of said mould member a steam supply passage communicating with said jacket portion of said mould member said steam supply passage being capable of communicating with a bottom open end of said first passage in a condition wherein said mould member is connected to said upper platen and there us formed at the upper portion of said mould member a steam exhaust passage communicating with said jacket portion of said mould member said steam exhaust passage being capable of communicating with a bottom open end of said second passage in a condition where said mould member is connected to said upper platen so that said steam passage is capable of connecting and communicating with said first passage and further with said steam inlet pipe and concurrently said steam exhaust passage is capable of connecting and communicating with said connecting passage and further with said steam outlet pipe.

In the vulcanising apparatus of the present invention, when the mould member having the jacket portion is connected to the upper platen, the bottom open ends of the two penetrating passages are connected to and communicate with the jacket portion and concurrently the upper open end of one penetrating passage is connected to the steam inlet pipe while the upper open end of the other penetrating passage is connected to the steam outlet pipe, and accordingly the connecting and communications of the jacket portion with the steam inlet pipe and the steam outlet pipe can be completed simultaneously in a single operation.

Further, by providing that the inner tubes are disposed slidably along the penetrating passages and pressed against the connecting surface of the mould by means of a spring and the like, appropriate pressure may be applied to a seal packing member on the connecting surface independently from the clamping force of the upper mould, and this ensures reliable sealing.

Further features and advantages of the present invention will be more clearly appreciated from the accompanying drawings, in which
Fig.1 is a schematic sectional view showing an embodiment of the present invention
Fig 2I and Fig 2II are enlarged sectional views showing different sights of a major part of another embodiment of the present invention.
Fig.3. is an enlarged sectional view showing a locking mechanism,
Fig 4I and Fig 4II are enlarged bottom views showing different sights of a locking mechanism;
Fig.5 is a schematic sectional view showing a major part of a different embodiment of the present invention.
Fig.6 is an enlarged sectional view taken along the line X-X of Fig.5 and
Fig.7 is a schematic sectional view showing a prior art apparatus.

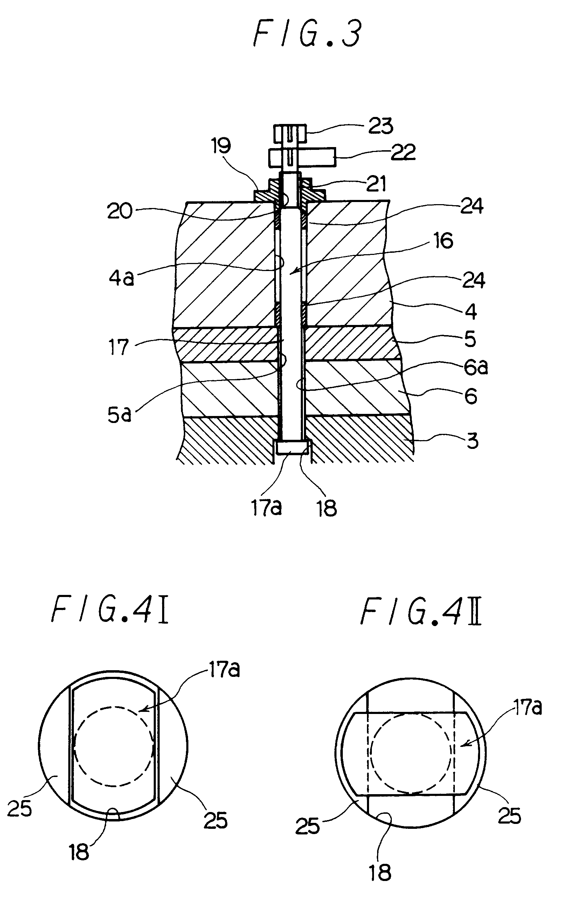

A tyre vulcanising apparatus of the segmental mould type is shown in figures comprising a bolster 4, an upper platen 6 attached to the bolster 4 with an insulating member 5 disposed therebetween, an mould member 3, which serves as a mould member, detachably connected to the upper platen 6 via a locking mechanism 16 (see to Fig. 3) and having internally a jacket portion 15, and an upper mould 11 supported by a raising and lowering mechanism which is not shown. The apparatus also has a lower platen 8 supported by a base 10 with another insulating member 9 therebetween and a lower mould 12. Further, a plurality of circumferentially divided sectors 2 are slidably supported by the actuator 3, and a tread ring 7 is supported by each sector 2. Numeral 1 indicates a mould comprising the actuator 3, the sectors 2, the upper mould 11 and the lower mould 12.

The downward or upward sliding movement of a sliding surface (S) of the mould member 3 relates to an inclined surface (T) of the sector 2 causes the inward or outward radial sliding movement of the sectors 2 with the tread ring 7 and simultaneously gives the downward or upward movement of the upper mould 11 so that the mould is closed or opened. The sector 2 is heated by means of the jacket portion 15 of the mould member 3.

Numeral 13 indicates a heat shield located around the upper mould 11, sector 2 and mould member 3, and numeral 14 indicates another heat shield located around the lower mould 12.

The previous mentioned locking mechanism 16 used for the detachable connection between the mould member 3 and the upper platen 6 comprises, as shown in Fig. 3, a rod 17 which is inserted into a hole 4a in the bolster 4, into a hole 5a of the insulating material 5 and into a hole 6a of the upper platen 6. It has an engaging portion 17a at its end, and a cylinder mechanism omitted in the drawing, which rotates the rod 17 around its central axis so that the engaging portion 17a can be detachably engaged with a complementary engaging recess 18 in the jacket portion 15.

More detailed explained of Fig.3 is given here. The upper portion of the rod 17 has a threaded portion 21 which projects from the bolster 4, while a flange 19 having a threaded hole 20 is fixed to the bolster 4 and the threaded portion 21 of the rod 17 is engaged with the female threaded hole 20 of the flange 19. In addition, a link 22 is attached to the rod 17 at a portion slightly over the threaded portion 21 to transmit the rotational force to a plurality of such ribs arranged for simultaneous rotation. Numeral 23 indicates a primary link which is connected to the cylinder mechanism omitted in the drawings. Through the primary link 23, rotational force is given to the rod 17 when the cylinder mechanism actuates. Thus the rod 17 is rotated by the cylindrical mechanism, and the rotation causes the up and down movement of the rod 17 according to the pitch of the thread. The numerals 24 indicate guide bushes which are inserted into the hole 4a in the bolster to facilitate the sliding movement of the rod 17.

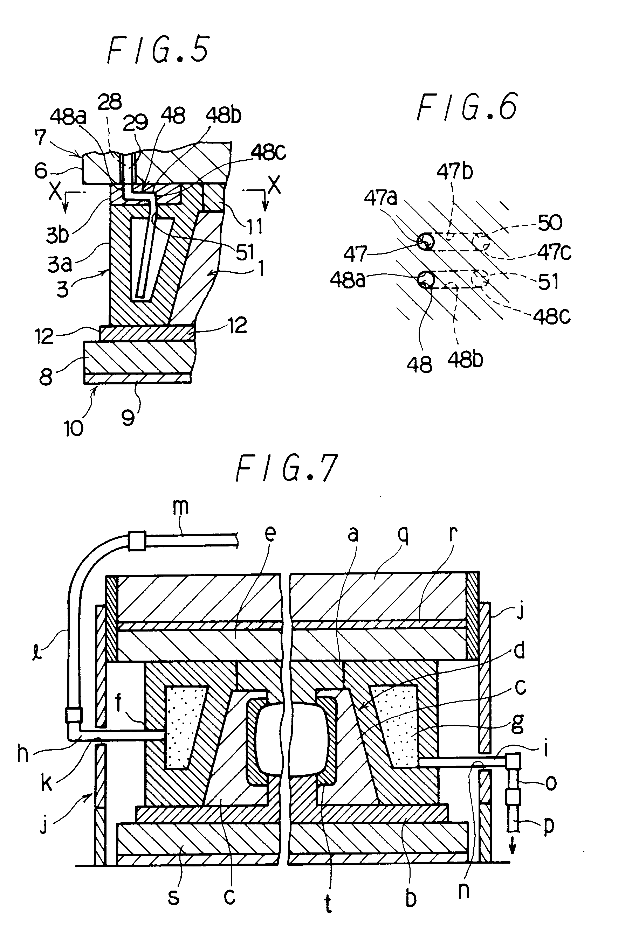

The engaging portion 17a of the rod 17 has a shape in plan view of a circle opposite sides cut away by a pair of parallel lines. Rotation of the rod 17 selectively provides a state shown in Fig 4II wherein each flange like portion having a round periphery catches an engaging surface 25 in the engaging recess 18, or alternatively another state shown in Fig 4I wherein the flange like portion does not catch the engaging surface 25.

Therefore, from the state shown in Fig. 4I, when the rod 17 is rotated in an appropriate direction by an angle of 90 degrees by means of the cylinder mechanism, the rod 17 is moved locking with the mould member 3 thread pitch and completes locking with the mould member 3 being pressed against the upper platen 6. Then, from the locked state (the state shown in Fig. 4II), when the rod 17 is rotated in the opposite direction to that above mentioned unlocking occurs.

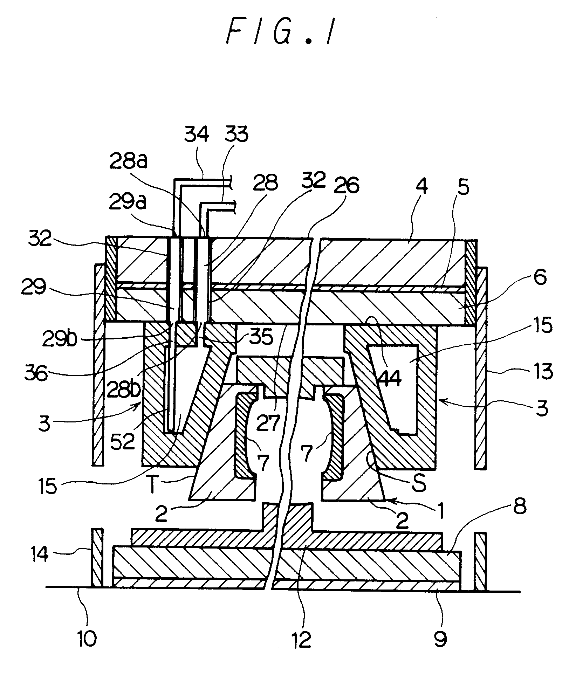

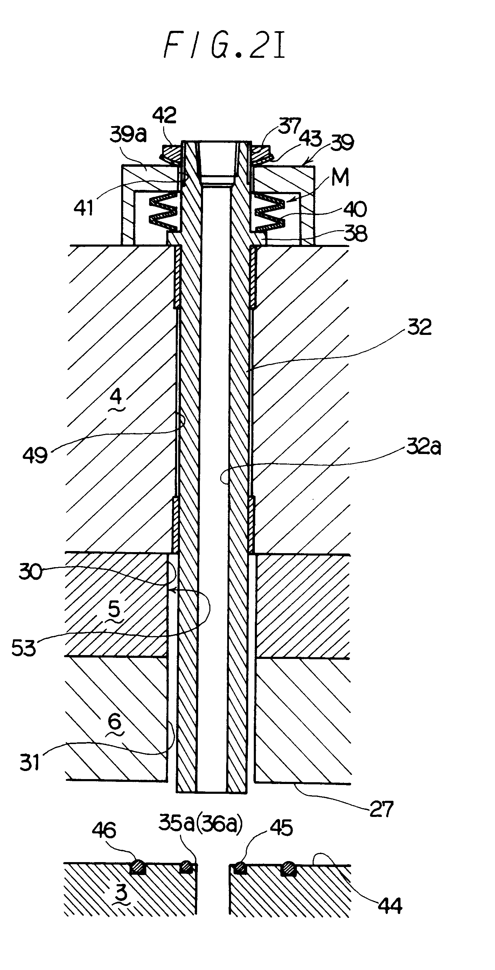

Again with reference to Fig.1 there is a pair of through passages 28, 29 extending from an upper surface 26 of the bolster 4 to a bottom surface 27 of the upper platen. A steam inlet pipe 33 is connected to an upper open end 28a of the first passage 28 and a steam outlet pipe 34 is connected to an upper open end 29a of the second passage 29. Further, there are respectively formed at the upper portion of the mould member 3 a steam supply passage 35 communicating with the jacket portion 15 and a steam exhaust passage 36 communicating with the jacket portion 15, so that the bottom open end 28b of the first penetrating passage 28 is brought into connection with the steam supply passage 35 while the bottom open end 29b of the second penetrating passage 29 is brought into connection with the steam exhaust passage 36 when the mould member 3 is brought into contact and this connection with the upper platen 6. Consequently, steam from the steam inlet pipe 33 is introduction into the jacket portion 15 of the mould member 3 through the first passage 28, then discharged from the jacket portion is through the second passage 29 to the steam outlet pipe 34. The steam inlet pipe 33 and the first passage 28 as well as the steam outlet pipe 34 and the second passage 29 are connected by means of screw joints or the like.

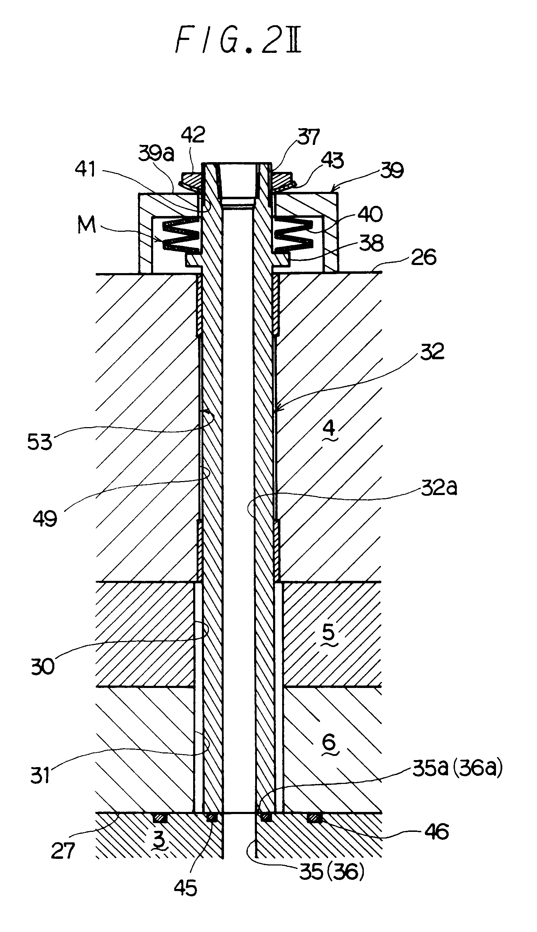

In another embodiment shown in Fig 2I and Fig 2II, there are formed two bores 53, 53 (i.e. the first through passage 28 and the second through passage 29) respectively comprising holes 49, in the bolster 4, holes 30, 30 in the insulation member 5 and holes 31, 31 in the upper platen 6. Into the bores 53, 53, inner tubes 32,32 are inserted and placed as explained below.

The inner tubes 32,32 are slidably placed in the bore 53, 53 each comprising holes 49, 30 and 31.

The inner tubes 32, 32 are slidably placed in the bore 53, 53 each comprising holes 49,30 and 31. Each inner tube 32 has a threaded portion 37 at its upper end portion, and below the threaded portion 37, has an outer flange portion 38 having a larger diameter than the hole 49. On the upper surface of the bolster 4, a pusher mechanism (M) for pressing downwardly each inner tube 32 is provided. The pusher mechanism (M) comprises an elastic spring member 40 such as a conical disc spring as indicated in Fig.2I and Fig 2II and a holder 39 for housing the elastic spring member 40. The elastic spring member 40 is disposed between the lower surface of the top wall 39a of the holder 39 and the upper surface of the outer flange portion 38, and always presses the inner tube 32 downwardly. Numeral 42 indicates a nut engaged with the threaded portion 37 of the inner tube 32 which projects upwardly from the top wall 39a of the holder 39 through an opening 41, and the numeral 43 indicates a detent washer.

Thus, in the condition the mould member 3 is not connected to the upper platen 6, as shown in Fig. 2I the inner tube 32 is pressed and moved downwardly by the elastic spring member 40, and the outer flange portion 38 abuts against the circumference of the upper open end of the passage 28 or 29 (the bore 53) with the lower end of the inner tube 32 projecting from the bottom surface 27 of the upper platen 6. In the other condition where the mould member 3 is connected to the upper platen 6 by means of the locking mechanism 16, as shown in Fig. 2II the lower end of the inner tube 32 is brought into contact with and pressed on the upper surface 44 of the mould member 3. Therefore, internal bores 32a, 32a, of the inner tubes 32, 32 are respectively brought into communication with the steam supply passage 35 and the steam exhaust passage 36 with sufficient sealing formed independently from the clamping force which is applied to the platen of the upper mould by the clamping mechanism. That is, one inner tube 32 is pressed on the circumference 35a of the upper open end of the steam supply passage 35, while the other inner tube 32 is pressed on the circumference 36a of the upper open end of the steam exhaust passage 36, respectively with appropriate pressure.

The term "appropriate pressure" means pressure which provides communication and connection between the first passage 28 with the steam inlet pipe 33 and the steam supply passage 35, and communication and connection between the second passage 29 with the steam outlet pipe 34 and the steam exhaust passage 36, respectively with sufficient sealing being formed.

In Fig.2I and Fig 2II, the numeral 45 indicates first seal ring such as any O-ring disposed between the lower edge of the inner pipe 32 and the upper surface 44 of the mould member 3, and numeral 46 indicates a second seal ring such as an O-ring disposed outside the first seal ring 45 and between the bottom surface 27 of the upper platen 6 and the upper surface 44 of the mould member 3. In addition, the numeral 52 in Fig .1 indicates a pipe disposed in the jacket portion 15 so that it communicates and connects with the steam exhaust passage 36 and extends to the bottom region of the jacket portion 15.

Thus, in the vulcanising apparatus employing the above mentioned construction, unlike the prior art apparatus, connecting work for the steam inlet and outlet pipes and the jacket portion can be easily and rapidly carried out in the operation of change of mould 1 without disconnecting and reconnecting the steam inlet pipe and the steam outlet pipe.

In the condition where the mould is closed, the hear shield 13 of the upper mould 11 and the heat shield 14 of the lower mould 12 contact each other and form a continuous heat shield.

Next, there is explained a different embodiment shown in Fig.5. In this embodiment, an mould member 3 comprises a main body member 3a and a sub member 3b. As shown in Fig.6 illustrating the sectional view of the sub member 3b taken along the line X-X of Fig.5, the sub member 3b has a pair of crank shaped connecting passages 47,48. Corresponding thereto, the main body member 3a has a pair of passages 50, 51 capable of connecting and communicating respectively with the connecting passages, 47,48. Thus, the connecting passage 47 and the passage 50 form a steam supply passage 35 and the connecting passage 48 and the passage 51 form a steam exhaust passage 36. That is, the connecting passages 47,48 respectively comprise upper vertical portions 47a, 48a, horizontal portions 47b, 48b respectively extending from the bottom ends of the upper vertical portions 47a, 48a inwardly in radial direction, and lower vertical portions 47c, 48c extending from the inner ends of the horizontal portions 47b 48b downwardly in vertical direction. The lower vertical portions 47c, 48c are brought into contact and communication respectively with the passage 50, 51. The upper vertical portions 47a, 48a are brought into contact and communication respectively with penetrating passages 28, 29 formed in a bolster 4 and also coaxially in an upper platen 6. Thus, in a condition wherein the mould member 3 is attached to the upper platen 6, the bottom open ends 28b, 29b of the penetrating passages, 28, 29 are brought into contact and communication respectively with the upper vertical portions 47a, 48a, and therefore, the penetrating passages 28, 29 are brought into communication with the jacket portion 15.

The sub member 3b serves as an adaptor. That is, the arrangement of the penetrating passages 28, 29 (or the inner tubes 32, 32) are fixedly decided in compliance with a mould having the largest size, although a smaller size mould has a smaller mould member 3 having a smaller diameter. Consequently, in the case that a smaller size mould is used in replacement of a larger size mould, the locations of the steam supply passage 35 and the steam exhaust passage 36 of the mould member 3 diviate radially inwardly relative to the location of the penetrating passages 28, 29 (or the inner tubes 32, 32) formed in the bolster 4 and in the upper platen. The sub member 3b is employed in order to cope with this matter.

It should be noted that the present invention is not limited to the specific embodiments aforementioned, and further modification, for example an employment of a cylinder mechanism in replacement of the elastic spring member 4 as the pusher mechanism (M) for elastically pressing down the inner tubes, 32, 32, can be freely made without departing from the spirit to scope of the present invention.

The apparatus of the present invention has the construction described hereinbefore and brings the following advantageous effects.

A vulcanising apparatus of the present invention has a construction wherein there us formed a pair of penetrating passages 28, 29 extending from an upper surface 26 of the bolster to a bottom surface 27 of the upper platen 6, a steam inlet pipe 33 is connected to an upper open end 28a of a first penetrating passage 28 of the pair penetrating passages, a steam outlet pipe 34 connected to an upper open end 29a of a second through passage 29 of the pair of passages, there is formed at an upper portion of the mould member 3 a steam supply passage 35 communicating with the jacket portion 15 of the mould member 3. The steam supply passage 35 capable of communicating with a bottom open end 28b of the first passage 28 in the condition wherein the mould member 3 is connected to the upper platen 6. Also there is at another upper portion of the mould member 3,a steam exhaust passage 36 communicating with the jacket portion 15 of the mould member 3. The steam exhaust passage 36 is capable of communicating with a bottom open end 29b of the second passage 29 in the condition where the mould member 3 is connected to the upper platen 6. Thus the steam supply passage 35 is capable of connecting and communicating with the first passage 28 and further with the steam inlet pipe 33 and concurrently said steam exhaust passage 34 is capable of connecting and communicating with the second passage 29 and further with the steam outlet pipe 34. In this apparatus, simply by attaching the mould member 3 to the upper platen 6, the steam inlet pipe 33 is brought into connection and communication with the jacket portion 15 through the first passage 28 and concurrently the steam outlet pipe 34 is brought into connection and communication with the jacket portion 15 through the second passage 29. Accordingly, the laborious work of disconnecting and reconnecting the steam inlet and outlet pipes is eliminated in the operation of the mould change. As a result, the required time for the operation of the mould change is greatly shortened and considerable improvement in productivity can be accomplished. Further, unlike the prior art apparatus, it is no longer necessary to make a pipe penetrate through the heat shield and consequently it is not necessary to provide another shield for such a penetration region and the structure of the heat shield can be simplified. Another vulcanising apparatus of the present invention employs the above mentioned construction and further has an additional feature wherein inner tubes 32 capable of sliding respectively along the first and second passages 28, 29 are placed respectively in the first and second passages 28, 29. The inner tubes 32, 32 are associated with pusher mechanisms (M,M) for pressing with appropriate pressure the inner tubes 32, 32 respectively against the periphery 35a of a top open end of the steam supply passage 35of the mould member 3 and against periphrary 36a of a top open end of the steam exhaust passage 36 of the mould member 3. The latter apparatus also provides the same advantageous effect as the former, because in this apparatus, simply by attaching the mould member 3 to the upper platen 6, the steam inlet pipe 33 is brought into connection and communication with the jacket portion 15 through the first passage 28 and concurrently the steam outlet pipe 34 is brought into connection and communication with the jacket portion 15 through the second passage 29. Further, the latter apparatus advantageously ensures more reliable connection and communication.

## Claims

1. A vulcanising apparatus equipped with an upper platen (6) supported by a bolster (4) and with a mould member (3) detachably connected to said upper platen (6), said mould member (3) having a jacket portion (15) for heating characterised in that there is formed a pair of through passages (28, 29) extending from an upper surface (26) of said bolster (4) to a bottom surface (27) of said upper platen (6), a steam inlet pipe (33) is connected to an upper open end (28a) of a first through passage (28) of said pair of passages, a steam outlet pipe (34) is connected to an upper end (29a) of a second through passage (29) of said pair of penetrating passages, there is formed at the upper portion of said mould member (3) a steam supply passage (35) communicating with said jacket portion (15) of said mould member (3), said steam supply passage (35) being capable of communicating with a bottom open end (28b) of said first passage (28) in a condition wherein said mould member (3) is connected to said upper platen (6) and there is formed at the upper portion of said mould member (3) a steam exhaust passage (36) communicating with said jacket portion (15) of said mould member (3), said steam exhaust passage (36) being capable of communicating with a bottom open end (29b) of said second passage (29) in a condition where said mould member (3) is connected to said upper platen (6) so that said steam passage (35) is capable of connecting and communicating with said first passage (28) and further with said steam inlet pipe (33) and concurrently said steam exhaust passage (34) is capable of connecting and communicating with said connecting passage (29) and further with said steam outlet pipe (34).

2. A vulcanising apparatus according to claim 1 characterised in that inner tubes (32, 32) capable of sliding respectively along said first and second passages (28,29) are placed respectively in said first and second passages (28,29) and said inner tubes (32, 32) are associated with pusher mechanisms (M,M) for pressing with an appropriate pressure said inner tubes (32, 32) respectively against a periphery (35a) of a top open end of said steam supply passage (35) of said mould member (3) and against a periphery (36a) of a top open end of said steam exhaust passage (36) of said mould member (3).

## Patentansprüche

1. Vulkanisier-Vorrichtung, die mit einer oberen Platte (6) ausgerüstet ist, welche durch ein Formhalteteil (4) abgestützt ist, und mit einem abnehmbar mit der oberen Platte (6) verbundenen Formteil (3), wobei das Formteil (3) einen Mantelabschnitt (15) zum Aufheizen besitzt, dadurch gekennzeichnet, daß ein Paar Durchlässe (28, 29) gebildet ist, welche sich von einer oberen Fläche (26) des Formhalteteils (4) zu einer unteren Fläche (27) der oberen Platte (6) erstreckt, wobei ein Dampfeinlaßrohr (33) mit einer oberen Mündung (28a) eines ersten Durchlasses (28) des Durchlaßpaares verbunden ist, ein Dampfauslaßrohr (34) mit einer oberen Mündung (29a) eines zweiten Durchlasses (29) des Durchlaßpaares verbunden ist, am oberen Abschnitt des Formteils (3) ein mit dem Mantelabschnitt (15) des Formteils (3) in Verbindung stehender Dampfzuführdurchlaß (35) ausgebildet ist, der Dampfzuführdurchlaß (35) mit einer unteren Mündung (28b) des ersten Durchlasses (28) dann in Verbindung kommen kann, wenn das Formteil (3) mit der oberen Platte (6) verbunden wird, und daß an dem oberen Abschnitt des Formteils (3) ein mit dem Mantelabschnitt (15) des Formteils (3) in Verbindung stehender Dampfauslaß (36) ausgebildet ist, welcher Dampfauslaß (36) mit einer unteren Mündung (29b) des zweiten Durchlasses (29) in Verbindung kommen kann, wenn das Formteil (3) mit der oberen Platte (6) verbunden wird, so daß der Dampfdurchlaß (35) fähig ist, mit dem ersten Durchlaß (28) und weiter mit dem Dampfeinlaßrohr (33) in Berührung und Verbindung zu kommen und gleichzeitig der Dampfauslaß (34) fähig ist, mit dem Verbindungsdurchlaß (29) und weiter mit dem Dampfauslaßrohr (34) in Berührung und Verbindung zu kommen.

2. Vulkanisier-Vorrichtung nach Anspruch 1, dadurch gekennzeichnet, daß Innenrohre (32, 32), die zum Gleiten längs der ersten und zweiten Durchlässe (28, 29) fähig sind, jeweils in die ersten und zweiten Durchlässe (28, 29) eingesetzt sind, und daß den Innenrohren (32, 32) je ein Stoßmechanismus (M, M) zugeordnet ist, um die Innenrohre (32, 32) jeweils gegen einen Umfang (35a) eines oberen offenen Endes des Dampfzuführdurchlasses (35) des Formteils (3) und gegen einen Umfang (36a) eines oberen offenen Endes des Dampfauslasses (36) des Formteils (3) anzudrücken.

## Revendications

1. Appareil de vulcanisation équipé d'un plateau supérieur (6) supporté par une traverse (4) et ayant un organe (3) de moule raccordé de façon amovible au plateau supérieur (6), l'organe (3) de moule ayant une partie (15) de double enveloppe de chauffage, caractérisé en ce qu'une paire de passages débouchants (28, 29) est formée d'une surface supérieure (26) de la traverse (4) à une surface inférieure (27) du plateau supérieur (6), un tube (33) d'entrée de vapeur d'eau est raccordé à une extrémité supérieure ouverte (28a) du premier passage débouchant (28) de la paire de passages, un tube (34) de sortie de vapeur d'eau est raccordé à une extrémité supérieure (29a) d'un second passage débouchant (29) de la paire de passages qui traversent, un passage (35) d'alimentation en vapeur d'eau est formé à la partie supérieure de l'organe (3) de moule et communique avec la partie de double enveloppe (15) de l'organe de moule (3), le passage (35) d'alimentation en vapeur d'eau pouvant communiquer avec une extrémité inférieure ouverte (28b) du premier passage (28) dans des conditions dans lesquelles l'organe (3) de moule est raccordé au plateau supérieur (6) et un passage (36) d'évacuation de vapeur d'eau est formé à la partie supérieure de l'organe (3) de moule et communique avec la partie (15) de double enveloppe de l'organe (3) de moule, le passage (36) d'évacuation de vapeur d'eau pouvant communiquer avec une extrémité inférieure ouverte (29b) du second passage (29) lorsque l'organe (3) de moule est raccordé au plateau supérieur (6), si bien que le passage (35) de vapeur d'eau peut assurer le raccordement et la communication avec le premier passage (28) et en outre avec le tube (33) d'entrée de vapeur d'eau et, simultanément, le passage (34) d'évacuation de vapeur d'eau peut assurer le raccordement et la communication avec le passage (29) de raccordement et en outre avec le tube (34) de sortie de vapeur d'eau.

2. Appareil de vulcanisation selon la revendication 1, caractérisé en ce que les tubes internes (32, 32) qui peuvent coulisser le long du premier et du second passage (28, 29) sont placés respectivement dans le premier et le second passage (28, 29) et les tubes internes (32, 32) sont associés à des mécanismes poussoirs (M, M) destinés à pousser les tubes internes (32, 32) avec une pression convenable contre la périphérie (35a) d'une extrémité supérieure ouverte du passage (35) d'alimentation en vapeur d'eau de l'organe (3) de moule et contre la périphérie (36a) d'une extrémité supérieure ouverte du passage (36) d'évacuation de vapeur d'eau de l'organe (3) de moule.
